# EUROPÄISCHE PATENTANMELDUNG

(11) **EP 0 685 313 A1**
(43) Veröffentlichungstag der Anmeldung: **06.12.1995**
(21) Anmeldenummer: 95108439.1
(22) Anmeldetag: 01.06.1995
(51) Int. Cl.: B29C 47/08, B29C 47/30

(54) **Stranggiesser für Stranggiessanlagen, insbesondere für thermoplastische Kunststoffe**

(30) Priorität: 03.06.1994 DE 4419555
(71) Anmelder: Rieter Automatik GmbH, D-63757 Grossostheim (DE)
(72) Erfinder: Meidhof, Helmuth, D-63762 Grossostheim (DE)
(74) Vertreter: Bardehle, Heinz, Dipl.-Ing.

(57) **Zusammenfassung**

Die Erfindung betrifft einen Stranggießer, insbesondere für Kunststoff-Stranggießanlagen, mit einer Düsenplatte und einem Gießer, die einander zugewandte Anlageflächen aufweisen, wobei die Düsenplatte an dem Gießer mit Befestigungselementen befestigbar ist. Die Oberfläche weist in einem unbefestigten und unverspannten Zustand von Düsenplatte und Gießer mindestens einer der Anlageflächen im Bereich der Befestigungselemente eine Oberflächenrücknahme gegenüber den jeweils zwischen den Befestigungselementen liegenden Oberflächenbereichen der Anlageflächen auf, so daß sich durch den im Betrieb verursachten verspannten Zustand die eine Anlagefläche unter Spannung der gegenüberliegenden anderen Anlagefläche anpaßt.

## Beschreibung

Die Erfindung bezieht sich auf Stranggießer gemaß dem Oberbegriff des Anspruchs 1.

Ein Stranggießer Von Stranggießanlagen, insbesondere für thermoplastischen Kunststoff besteht gewöhnlich aus einer an einem Gießer angeschraubten Düsenplatte, wobei die Düsenplatte und der Gießer einander zugewandte ebene Anlageflächen aufweisen.

Ebenso wie in vielen anderen Anwendungsfallen soll bei miteinander zu verbindenden, verschraubten oder geklemmten Teilen vor allem durch eine große Anzahl von möglichst gleichmäßig verteilten Befestigungselementen eine möglichst gleichmäßige Flächenpressung im Betriebszustand an den Anlageflächen erreicht werden, um wie im Fall von Stranggießern eine Leckage zu vermeiden. Selbst bei zu verbindenden Teilen, bei denen im Innern kein zusätzlicher, z.B. hydraulisch bedingter Druck wirkt, laßt es sich physikalisch nicht vermeiden, daß die Flächenpressung bei ebenen Teilen zwischen den in bestimmten Teilungsabständen angeordneten Befestigungselementen, z.B. Schrauben oder Klemmelementen, abnimmt.

Bei einem Stranggießer wird in der Regel eine Düsenplatte nahe ihrer äußeren Peripherie mit einer Anzahl von Befestigungselementen an einem Gießer befestigt. Da die Düsenplatte und auch der Gießer einer zusätzlichen Innendruckbelastung ausgesetzt sind, die durch den Extrudiervorgang selbst hervorgerufen ist, kann es zu einem zur Leckage führenden Spalt zwischen der Düsenplatte und dem Gießer kommen. Um dies zu vermeiden, werden bei Stranggießeranordnungen häufig eine oder mehrere Dichtungen zwischen der Düsenplatte und dem Gießer in Verbindung mit einer größeren Anzahl von Schrauben verwendet. Je größer die Anzahl der Schrauben ist, umso gleichmäßiger kann die Flächenpressung zwischen der Düsenplatte und dem Gießer realisiert werden. Der großen Anzahl von Schrauben steht jedoch eine Reparaturunfreundlichkeit und eine verschlechterte Austauschbarkeit der Düsenplatte entgegen.

Das Ziel der Erfindung besteht deshalb darin, einen Stranggießer zu schaffen, bei dem die Düsenplatte ohne eine Dichtung mit einer reduzierten Anzahl von Befestigungselementen an einem Gießer befestigbar ist.

Dieses Ziel wird mit einem Stranggießer mit den Merkmalen gemäß Anspruch 1 erreicht.

Zweckmäßige Weiterbildungen des Stranggießers werden durch die Unteransprüche definiert.

Gemäß der Erfindung wird ein Stranggießer bereitgestellt, der insbesondere bei Stranggießanlagen für thermoplastischen Kunststoff eingesetzt wird, bei dem die einander zugewandten Anlageflächen einer Düsenplatte und eines Gießers so ausgeführt sind, daß die Oberflächengestalt mindestens einer der Anlageflächen sich im Betriebszustand an die andere, gegenüberliegende Anlagefläche unter Spannung anpassen kann, so daß eine gleichmäßige Flächenpressung zwischen der Düsenplatte und dem Gießer erreichbar ist.

Die Flächenpressung der unter Spannung anliegenden Anlageflächen ist für den jeweiligen gewünschten Belastungsfall zu ermitteln. An Stellen hoher Flächenpressung erfolgt ein Materialabtrag bzw. eine Oberflächenrücknahme. An Stellen minimaler Flächenpressung bleibt die Oberfläche erhalten. Nach mehreren Iterationen ist die optimierte Oberflächengestalt erreicht.

Im nicht verspannten Zustand und bei lose anliegenden Anlageflächen ergeben sich somit Hohlräume zwischen den Anlageflächen. Sie sind umso größer, je höher die an der jeweiligen Stelle zu erwartenden einwirkenden Pressungskräfte sind.

Da sich hierbei eine recht komplizierte Oberflächengestalt ergeben kann, die auch schwierig herzustellen ist, kann in vielen Fällen nur eine vereinfachte Oberflächengestalt verwirklicht werden, die auch nur eine annähernd gleichmäßige Flächenpressung ermöglicht.

Vorzugsweise wird mindestens eine der beiden Anlageflächen nicht mehr eben, sondern bezüglich ihrer Oberflächengestalt ballig bzw. gewölbt ausgeführt. Die Anlageflächen weisen somit bezüglich ihrer Oberflächengestalt einen oder mehrere Krümmungsradien auf. Die Oberflächengestalt der Anlageflächen weist aus Gründen der Vermeidung von Spannungsspitzen, d.h. zur Erzielung einer gleichmäßigen Flächenpressung, kontinuierliche Übergänge zwischen den Krümmungsradien auf. Die Oberflächengestalt der Anlageflächen mit Ausnahme ihrer Ränder ist somit frei von Sprüngen in der Geometrie und weist keine Oberflächenabsätze auf.

Die Oberflächengestalt mindestens einer der Anlageflächen kann im gesamten Bereich der Befestigungselemente gleichmäßig abgeflacht bzw. eine gleichmäßige Krümmung aufweisen, oder es können auch Vertiefungen in der Oberfläche im Bereich jedes einzelnen Befestigungselementes vorgesehen sein. Die Anlageflächen weisen demzufolge eine derartige Oberflächengestalt auf, daß im Falle von Schrauben als Befestigungselemente, direkt unter dem Schraubenkopf bzw. bei Klemmelementen direkt unter der direkten Klemmstelle vor dem Befestigen der Düsenplatte an dem Gießer diese "hohl liegen"; d.h. sie sind mit einem bestimmten Spalt ausgeführt, während zwischen den Abständen der einzelnen Befestigungselemente die Anlagefläche der Düsenplatte und die des Gießers direkten Flächenkontakt aufweisen. In besonders günstiger Weise ergibt sich somit beim Anziehen der Schrauben bzw. der Klemmelemente beim Verklemmen der Düsenplatte an dem Gießer, daß beide Anlageflächen in einen Flächenkontakt gezwungen werden, sich durch die elastische Biegung der gekrümmten Oberfläche an die gegenüberliegende Anlagefläche anzupassen.

Für bestimmte Anwendungsfälle kann es vorteilhaft sein, von der im wesentlichen ebenen Form der Düsenplatte und des Gießers abzuweichen und beide Bauteile des Stranggießers mit einem entsprechenden Radius zu versehen, so daß die Anlagefläche sowohl der Düsenplatte als auch des Gießers eine Kugel- oder Zylinderform aufweist. In die Kugel- oder Zylinderfläche sind analog zu dem im wesentlichen eben ausgeführten Düsenplatte-Gießersystem Vertiefungen bezüglich einer gedachten Kugel- oder Zylinderfläche in mindestens eine der Anlageflächen so eingearbeitet, daß unter Nutzung der Elastizität der Bauteile sich die Anlageflächen beim Verspannen der Düsenplatte an dem Gießer ebenfalls aneinander anpassen.

Um eine Wiederverwendbarkeit entweder der Düsenplatte oder des Gießers in Kombination mit jeweils einer anderen Form des jeweils anderen gegenüberliegenden Bauteils zu gewährleisten, ist die Abweichung der Oberflächengestalt der Anlageflächen von der idealen gedachten Form, wie z.B. der ebenen Form oder der Kugel- bzw. der Zylinderflächenform, so ausgebildet, daß im Betriebszustand die Spannungen und/oder die Dehnungen innerhalb des Hook'schen Bereiches liegen.

Die Vorteile, Merkmale und Anwendungsmöglichkeiten der vorliegenden Erfindung sind in der nachfolgenden Beschreibung von Ausführungsbeispielen in der Verbindung mit der Zeichnung näher erläutert. In der Zeichnung zeigen:
- Fig. 1 a): die Flächenpressungsverteilung für eine mit Schrauben an einem Gießer befestigte Düsenplatte entlang einer Linie, die die einzelnen Befestigungsschrauben verbindet, für den Bereich der Befestigungsschrauben am äußeren Rand der Düsenplatte parallel zu einer Düsenreihe, und
- Fig. 1b): für den Bereich der Befestigungsschrauben nahe der eigentlichen Düse;
- Fig. 2 a),b): eine erste Ausführungsform der vorliegenden Erfindung, und zwar in prinzipieller Darstellungsweise, wobei Düse und Gießerinnenraum vereinfacht dargestellt sind;
- Fig. 3a): eine weitere Ausführungsform der vorliegenden Erfindung mit einer ausgearbeiteten Oberflächengestaltung der Düsenplatte und
- Fig. 3b): einer ausgearbeiteten Oberflächengestaltung des Gießers.

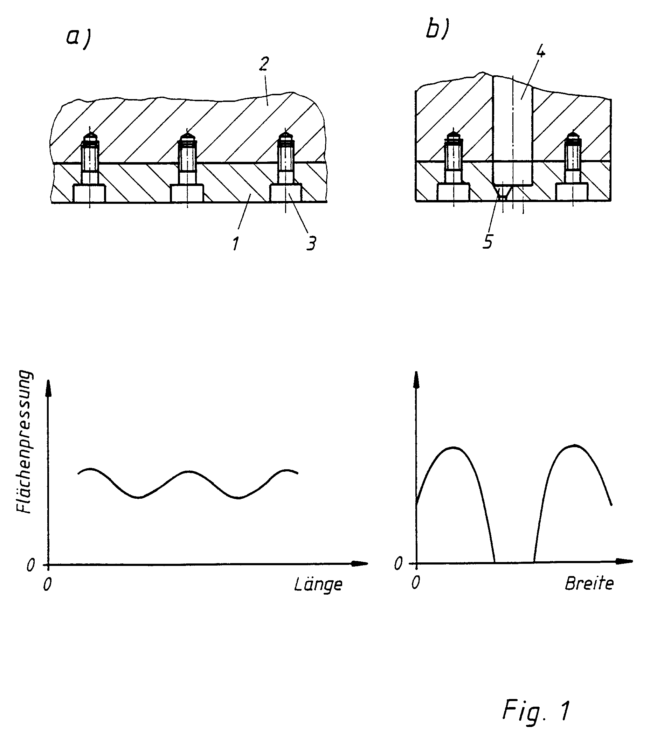

In Fig. 1 ist ein Ausschnitt des Düsenbereichs eines Stranggießers mit einer Düsenplatte 1 und einem Gießer 2 dargestellt. Fig. 1a) zeigt im Betriebszustand, d.h. im durch diesen verursachten verspannten Zustand, Schrauben 3, die die Düsenplatte 1 mit ihrer ebenen Anlagefläche an den Gießer 2 mit seiner ebenfalls ebenen Anlagefläche anpressen. In der Figur darunter ist die zu einer derartigen Verspannung gehörende Flächenpressungsverteilung der Trennfuge in qualitativer Darstellungsweise angegeben. Fig. 1b) zeigt denselben Teilbereich des Stranggießers, jedoch als Schnittdarstellung in Querrichtung zu der Darstellung von Fig. 1a), und zwar unmittelbar durch den Düsenbereich. In der Düsenplatte 1 befindet sich die Düse 5 sowie entsprechende Bohrungen zur Aufnahme der Befestigungsschrauben 3. Im Gießer 2 ist im Inneren ein Hohlraum 4 angegeben, über den der bis zu einem plastischen Zustand erwärmte thermoplastische Kunststoff der Düse 5 zugeführt wird. Da diese Erwärmung des Kunststoffes im Gießer durch entsprechende Heizeinrichtungen erfolgt, wird der Gießer häufig auch als sogenannter Heizkasten bezeichnet. Die einander zugewandten Anlageflächen sowohl der Düsenplatte 1 als auch des Gießers 2 sind eben ausgeführt. Die unter der Fig. 1b) angeordnete Figur zeigt den zugehörigen Flächenpressungsverlauf ebenfalls in qualitativer Darstellung. Dieser Verlauf zeigt ausgeprägte Flächenpressungsspitzenwerte im unmittelbaren Bereich der Befestigungsschrauben und Bereiche einer Flächenpressung von Null im Düsenbereich. Die Flächenpressung von Null belegt, daß im Düsenbereich aufgrund des Innendruckes des Kunststoffes, der bei herkömmlichen Stranggießern im Bereich von ca. 2 bis 5 MPa liegt, Bereiche mit einer Flächenpressung gleich Null auftreten können. Das bedeutet, daß gerade in dem Düsenbereich ein Austreten des Kunststoffes aufgrund nicht erfolgter Dichtung zwischen der Düsenplatte 1 und dem Gießer 4 in eine seitliche Richtung erfolgen kann.

Um dieses Problem zu vermeiden, ist gemäß der Erfindung entweder die Düsenplatte 1 oder der Gießer 2 so ausgeführt, daß unter Beachtung der Elastizitätseigenschaften der miteinander zu verspannenden Bauteile Materialabschnitte an mindestens einer Anlagefläche dieser beiden Bauteile (Düsenplatte, Gießer) derart abgetragen sind, daß sich im verspannten Zustand, d.h. im Betriebszustand unter Beachtung des in dem Stranggießer herrschenden Innendruckes, ein Anlegen der beiden Anlageflächen 6, 7 aneinander ergibt.

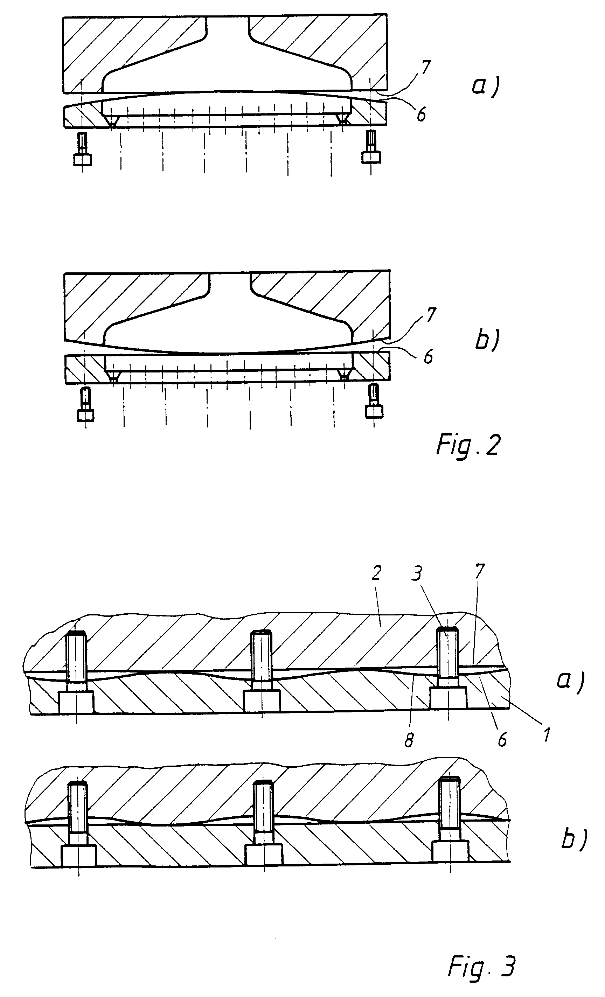

In Fig. 2 sind in prinzipieller Darstellung zwei Ausführungsbeispiele der vorliegenden Erfindung dargestellt. In Fig. 2a) ist die Düsenplatte 1 mit einer Oberflächengestalt ihrer Anlagefläche 6 so ausgeführt, daß die Anlagefläche 6 bezüglich der seitlich neben dem Düsenbereich an beiden Seiten der jeweils rechteckig ausgeführten Düsenplatte und des Gießers angeordneten Spannschraubenreihe eine gewölbte Form aufweist. Die Anlagefläche 7 des Gießers 2 bleibt dabei im wesentlichen eben. Bei einer derart gewölbten Düsenplatte 1 wird bei ihrem Verspannen mit dem Gießer 2 ein Anlegen der nach unten gewölbten seitlichen Bereiche der Düsenplatte 1 an die Anlagefläche 7 des Gießers 2 erreicht. Gleichzeitig wird durch den Mittelbereich der gewölbten Anlagefläche 6 im unmittelbaren Bereich der Düse 5 des Stranggießers ein Anheben der Flächenpressung erreicht, so daß sich insgesamt eine gleichmäßigere Flächenpressung in Querrichtung ergibt und gleichzeitig vermieden wird, daß auch unter Berücksichtigung des im Stranggießer herrschenden Innendruckes ein Spalt zwischen Düsenplatte 1 und Gießer 2 auftritt, der zu einer Leckage des thermoplastischen Kunststoffes in seitlicher Richtung führen würde.

In Fig. 2b) weist die Düsenplatte 1 eine im wesentlichen ebene Form auf, und die gegenüberliegende Anlagefläche 7 des Gießers 2 weist eine gewölbte Form auf. Beim Verschrauben der Düsenplatte 1 am Gießer 2 zieht sich die Düsenplatte an die gewölbte Form des Gießers vollkommen aufgrund ihrer eigenen Elastizität heran, wodurch ebenfalls eine in der Breitenrichtung gleichmäßige Flächenpressung erzielt wird, die ebenfalls ein seitliches Austreten des Kunststoffes zwischen Düsenplatte 1 und Gießer 2 verhindert.

Bei dem in Fig. 3 dargestellten weiteren Ausführungsbeispiel ist keine der Anlageflächen 6, 7 der Düsenplatte 1 bzw. des Gießers 2 in einer Richtung gewölbt ausgeführt, sondern im Bereich der Befestigungselemente, d.h. der Schrauben zur Befestigung der Düsenplatte 1 am Gießer 2, sind gleichmäßig eingearbeitete, vorzugsweise symmetrische Vertiefungen vorgesehen. Diese Vertiefungen im Bereich der Befestigungsschrauben 3 bewirken beim Verspannen, daß die Bereiche der Düsenplatte 1 im unmittelbaren Bereich des Schraubenkopfes aufgrund der im Bereich der Vertiefung vorhandenen Materialschwächung in Verbindung mit der Elastizität des Materials der Düsenplatte 1 bzw. des Gießers 2 an die gegenüberliegende Anlagefläche herangezogen werden, so daß sich in der Querrichtung eine gleichmäßige Flächenpressung von Befestigungsschraube zu Befestigungsschraube ergibt.

In der Fig. 3b) sind die Vertiefungen 8 in die Anlagefläche 7 des Gießers 2 eingearbeitet, und die Düsenplatte 1 bleibt bezüglich ihrer Anlagefläche 6 im Gegensatz zu Fig. 3a) im wesentlichen eben. Dieser letztgenannte Fall ist vor allem dann sinnvoll, wenn eine große Vielfalt der Stranggießprofile gewünscht wird, so daß eine große Anzahl unterschiedlicher Düsenplatten 1 erforderlich ist. Im anderen Fall wird bevorzugt, die Vertiefungen 8 in die Düsenplatte 1 einzuarbeiten und die Anlagefläche 7 des Gießers 2 eben zu belassen.

Bei einem weiteren, nicht dargestellten Ausführungsbeispiel können sowohl die Anlagefläche 6 der Düsenplatte 1 als auch die Anlagefläche 7 des Gießers 2 Vertiefungen 8 aufweisen.

Prinzipiell ist es auch möglich, sowohl die Düsenplatte als auch den Gießer kugelförmig bzw. zylindrisch auszuführen, wobei in die Kugel- bzw. Zylinderoberfläche dann die entsprechenden Vertiefungen 8 in analoger Weise wie bei einer ebenen Anlagefläche eingearbeitet sind.

Die Herstellung von gewölbten Anlageflächen kann in an sich bekannter Weise z.B. dadurch erreicht werden, daß das gewölbt auszuführende Bauteil über entsprechende Abstützungen in eine gewölbte Form gedrückt wird und anschließend an der gegenüberliegenden Seite eine Planfläche geschliffen wird, die nach erfolgter Entlastung des Bauteiles die eigentliche gewölbte Form darstellt. Ohne Verspannung des mit einer gewölbten Anlagefläche auszuführenden Bauteils ist selbstverständlich die Wölbung über CNC-gesteuerte Flachschleifmaschinen erzeugbar. Die Vertiefungen im Bereich der Befestigungselemente können ebenfalls in bekannter Weise durch dreiachsig gesteuerte CNC-Flachschleifmaschinen erreicht werden, oder aber die Düsenplatte wird so verspannt an einer entsprechend geformten Gegenfläche, daß im verspannten Zustand mit einer konventionellen Flachschleifmaschine die freiliegende Oberfläche wieder glatt geschliffen wird, so daß sich nach Entlastung der während des Schleifens verspannt gehaltenen Düsenplatte an den Bohrungen für die Befestigungsschrauben die entsprechenden kontinuierlich ausgearbeiteten Vertiefungen ergeben.

Je nach Steifigkeit, Materialdicke und damit verbundenem Innendruck liegt die Tiefe der Vertiefungen bzw. das von der gedachten ebenen Planfläche abweichende maximale Wölbungsmaß vorzugsweise in einem Bereich von > 0 bis mehrere hundertstel Millimeter.

Einfach gekrümmte (gewölbte) oder doppelt gekrümmte (kugelförmige) Anlageflächen werden vorzugsweise bei rechteckig ausgeführten Düsenplatten und Gießern angewendet. Bei kreisförmigen Düsenplatten bzw. Gießern wird vorzugsweise die mit Vertiefungen im Bereich der Befestigungsschrauben ausgeführte Oberflächengestalt der Anlageflächen angewendet.

## Patentansprüche

1. Stranggießer, insbesondere für Kunststoff-Stranggießanlagen, mit einer Düsenplatte (1) und einem Gießer (2), die einander zugewandte Anlageflächen (6,7) aufweisen, wobei die Düsenplatte (1) an dem Gießer (2) mit Befestigungselementen (3) befestigbar ist,
**dadurch gekennzeichnet**, daß
die Oberfläche in einem unbefestigten und unverspannten Zustand von Düsenplatte und Gießer mindestens einer der Anlageflächen (6,7) im Bereich der Befestigungselemente eine Oberflächenrücknahme gegenüber den jeweils zwischen den Befestigungselementen liegenden Oberflächenbereichen der Anlageflächen (6,7) aufweist, so daß sich durch den im Betrieb verursachten verspannten Zustand die eine Anlagefläche unter Spannung der gegenüberliegenden anderen Anlagefläche anpaßt.

2. Stranggießer, nach Anspruch 1, dadurch gekennzeichnet, daß die Oberflächengestalt der Anlageflächen (6, 7) mit Ausnahme ihrer Ränder keine Sprünge in der Geometrie und keine Oberflächenabsätze aufweist.

3. Stranggießer nach Anspruch 2, dadurch gekennzeichnet, daß die Oberflächengestalt mindestens einer Anlagefläche ballig ist.

4. Stranggießer nach einem der Ansprüche 1 bis 3, dadurch gekennzeichnet, daß die Oberflächengestalt mindestens einer der Anlageflächen (6, 7) so ausgeführt ist, daß im Bereich der Befestigungselemente (3) diese Anlagefläche in einem unbefestigten Zustand Vertiefungen bezüglich einer gedachten Kugel- oder Zylinderfläche mit einem Krümmungsradius aufweist, wobei die andere Anlagefläche den gleichen Krümmungsradius wie die gedachte Kugel- oder Zylinderfläche aufweist.

5. Stranggießer nach einem der Ansprüche 1 bis 4, dadurch gekennzeichnet, daß die Anlagefläche der Düsenplatte (1) die für die gleichmäßige Flächenpressung erforderliche gewölbte und/oder mit Vertiefungen versehene Oberflächengestalt aufweist.

6. Stranggießer nach einem der Ansprüche 1 bis 5, dadurch gekennzeichnet, daß die Anlagefläche des Gießers (2) die für eine gleichmäßige Flächenpressung erforderliche gewölbte und/oder mit Vertiefungen versehene Oberflächengestalt aufweist.

7. Stranggießer nach einem der Ansprüche 1 bis 6, dadurch gekennzeichnet, daß die Oberflächengestalt der Anlageflächen so ausgebildet ist, daß die Spannungen und/oder Dehnungen der Düsenplatte und/oder des Gießers im Betriebszustand innerhalb des Hook'schen Bereiches liegen.
